# EUROPEAN PATENT SPECIFICATION

(11) **EP 4 524 538 B1**
(45) Date of publication and mention of the grant of the patent: **02.12.2026**
(21) Application number: 23203047.8
(22) Date of filing: 11.10.2023
(51) Int. Cl.: G01M 3/16, E04D 13/00

(54) **DETECTING AND LOCATING LEAKS IN LOW SLOPE ROOFS**
ERKENNUNG UND ORTUNG VON LECKS IN DACHBAHNEN MIT GERINGER NEIGUNG
DÉTECTION ET LOCALISATION DE FUITES DANS DES TOITS À FAIBLE PENTE

(30) Priority: 15.09.2023 US 202318468176
(43) Date of publication of application: 19.03.2025
(73) Proprietor: Detec Systems LLC, Bellingham, WA 98228 (US)
(72) Inventor: Katz, Shaun, Washington, 98264 (US); McGough, Bryan, Washington, 98248 (US); Judd, Benjamin, Washington, 98226 (US); Vokey, David, Washington, 98229 (US)
(74) Representative: Handsome I.P. Ltd

(56) References cited:
- EP-A1- 1 052 491
- EP-A2- 1 767 917
- WO-A1-95/02809
- DE-U1- 202019 001 810
- US-A1- 2019 178 744

## Description

The present invention relates to an arrangement for testing roof membranes for damage to and breaches in roof membranes by detection and location of moisture penetration. It has particular application to testing the integrity of low-slope and flat roofs of residential and commercial buildings.

### BACKGROUND OF THE INVENTION

The failure to detect, find and correct minor roof deterioration in the earliest stages is considered the greatest cause of premature roof failure. This is particularly true of roofing materials applied on low-slope or flat roofs. Costly roofing problems are often the result of design deficiencies or faulty application of the roof system. Even when properly designed and applied, all roofing materials deteriorate from contraction and expansion of roof decks and natural aging processes.

Several methods have been used to try and locate roof leaks after they have occurred.

One example disclosed in US Patent 6,747,463 (Rynhart) issued June 8 2004 which discloses an electric capacitance meter which is used to identify moisture under the membrane using a low frequency that measures dielectric constant changes in the roofing material as a result of moisture below the membrane.

More specifically this discloses a moisture meter which has a capacitive sensing circuit feeding into a digital control circuit having a microcontroller. Input buttons allow a user to select a material being surveyed. They also allow the user to instruct the meter to hold a particular reading. This allows it to be more conveniently read. The output of the digital control circuit is fed via an ADC to a moving coil meter. This provides an easy-to-read display in which trends as the meter is moved across a surface are easy to track. The detection of moisture is obtained using two spaced conductors above the membrane which are intended to detect changes in moisture content below the membrane caused by a change in capacitance between the two carriage mounted conductors.

In an alternative method Infrared analysis can be used as shown in US Patent 3,791,097 (Cassella) issued February 12 1974 which provide an arrangement which allows technicians to scan roof surfaces for temperature differentials that signify moist areas through changes in thermal conductivity or evaporation. While these methods can indicate that there is moisture just under the membrane it does not usually point to the source of the water when a leak occurs. A better forensic method is needed to locate the problem area when a roof is leaking.

In US Patent 7,554,345 by the present applicant issued June 30 2009 is disclosed an arrangement in which a leak in a membrane on top of a horizontal roof deck is located by a manually operable carriage which is swept over the upper surface of the membrane on the roof deck. A measuring and switching circuit generates a voltage having a positive attached to the roof deck and a negative attached to conductive brushes on the carriage. The brushes are arranged to form an outer peripheral contact with an inner contact inside the outer contact. Thus the presence of a leak is detected by the outer set of conductive brushes at distance from the leak and by the inner conductive brush when directly over the leakage site.

Other systems and methods for detecting leak in a roof by using electrical measurements are disclosed in WO95/02809 A1, EP1052491 A1, DE202019001810 U1 and EP1767917 A2.

### SUMMARY OF THE INVENTION

According to a first aspect of the invention there is provided a method of detecting a leak in a roof according to claim 1, where the roof comprises a generally horizontal roof support deck with a water impermeable membrane applied onto the upper surface of the support deck, the method comprising:
providing a conductor arrangement for location on the roof above the membrane;
moving the conductor arrangement across the roof to different locations thereon;
providing a return conductor arrangement for electrical connection to the support deck;
where at least a component of the support deck is conductive;
detecting changes in capacitance between a first conductor defined by the conductor arrangement and a second conductor defined by the conductive component of the support deck caused by presence of moisture between the first and second conductors;
and providing an output indication of the presence of moisture in response to the changes.

According to a second aspect of the invention there is provided an apparatus for detecting and locating a leak in a roof according to claim 15, where the roof comprises a generally horizontal roof support deck with a water impermeable membrane applied onto the upper surface of the support deck where at least a component of the support deck is conductive, the apparatus comprising:
a detection assembly;
a first conductor arrangement for location on the roof above the membrane, the conductor arrangement being arranged for connection to the detection assembly;
the first conductor arrangement being mounted for movement across the roof to different locations thereon;
a return conductor arrangement for electrical connection to the support deck the conductor arrangement being arranged for connection to the detection assembly;
the first conductor being arranged for detecting changes in capacitance at the membrane caused by presence of moisture;
the detection assembly being arranged for providing an output indication of the presence of moisture in response to the changes in capacitance.
a second conductor arrangement for location on the roof above the membrane, the second conductor arrangement being arranged for connection to the detection assembly;
the second conductor arrangement being mounted for movement across the roof to different locations thereon;
the second conductor being arranged for detecting changes in conductance through the membrane caused by presence of moisture;
where the first conductor arrangement is used first to detect presence of moisture and the second conductor arrangement is used subsequently to detect location of the moisture.

Preferably for the capacitive detection the conductor arrangement comprises as conductive member having a generally horizontal surface such as a plate. The conductive surface can be carried on a manual handle for scanning movement across the roof. The conductive surface is preferably flat and is arranged to slide over a surface of the roof so that it is responsive to changes in capacitance between the surface above the membrane and the conductive moisture below the membrane. The conductive surface can also be made up as a brush with conductive bristles or an array of other depending conductive elements such as a series of chains in a tight pattern. The dimensions can be of the order of 9 inches by 9 inches as a rectangle or circular pattern.

In order to detect the changes in capacitance, a signal generator is provided which injects an ac signal into the conductive component of the support deck so that the ac signal travels through the grounded water path to the underside of the membrane in an area of moisture and is communicated to the conductor arrangement by capacitive coupling. This acts to detect the moisture but has less ability to locate or pinpoint the specific location at which the moisture is penetrating.

Preferably the ac signal is detected at the conductor arrangement and is filtered and amplified to detect changes therein.

Preferably there is provided a meter which displays the received signal amplitude and a voltage to frequency converter which communicates an audio signal to a speaker which provides an audible indication as to the amplitude of the detected signal.

In accordance with another important aspect, in response to the output indication of detection of the presence of moisture, a second location operation is carried out to detect conduction of current through the membrane at a fault into order to locate the fault.

In order to carry out both the detection and location steps preferably there is provided a common assembly for detection of the capacitance changes and to carry out the second operation where the common assembly is connectible to the conductor arrangement for detection of capacitance changes and connectible to a second detector for the second operation.

Preferably the second operation comprises:
providing a second conductor arrangement for engaging the roof above the membrane;
providing a return conductor arrangement for electrical connection to the conductive component of the support deck;
generating an electrical potential between the first and return conductor arrangements;
mounting the second conductor arrangement on a carriage which can be moved over the roof so as to scan the second conductor arrangement over selected areas of the roof while the second conductor arrangement remains in contact with the roof as the carriage is moved;
sensing the current flowing from the roof support deck to the second conductor arrangement;
and detecting the changes in the current as the first conductor arrangement is scanned over the selected areas of the roof to locate the leak in the membrane.

Preferably in the second locating step the carriage of the second conductor is mounted on roller wheels for carrying the carriage in rolling movement over the roof and the carriage includes a handle such that the carriage can be manually rolled across the roof.

In order to provide an improved operation, preferably the second conductor arrangement includes first and second conductor members which are electrically isolated from each other, wherein an electrical potential is arranged to be applied between the second conductor member of the first conductor arrangement and the roof support deck and between the second conductor member of the second conductor arrangement and the roof support deck and wherein the current flowing from the roof support deck to the first and second conductor members is independently sensed to detect the changes in current as the first conductor arrangement is scanned over the selected areas of the roof to locate the leak site in the membrane. In this arrangement preferably the first conductor member is an inner member and the second member is an outer shielding member surrounding the first inner member with both the first inner member and the second outer member engaging the roof.

The present invention is a method which can be used in a forensic search for the source of a roof leak. This involves an electrical test device that traces the path of the leak from the building ground up to the point of origin. In most cases a water leak originating at the roof assembly will create a water path from the original source of the leak back to the building ground. The electrical device uses a low frequency test signal that is injected into the building ground which then follows the water path up to the roof system. Single ply roof membranes are often made of thermoplastics such as has polyvinyl chloride (PVC) or thermoplastic polyolefin (TPO). Both membranes are electrical insulators and have a dielectric constant ranging from about 2.3 to 2.9. In tracing the electrical path of the water leak direct current conductance cannot be used as the membrane is an insulator. In the present invention a capacitive coupling method is used.

### BRIEF DESCRIPTION OF THE DRAWINGS

Figure 1 is an illustration of a system for scanning a roof assembly to detect leaks leading to penetration of moisture according to the present invention.
Figure 2 is a schematic illustration of the steps for detecting the presence of moisture in a DETECT portion of the system.
Figure 3 is a Block diagram of the DETECT portion of the system.
Figure 4 is a Block diagram of the LOCATE portion of the system.
Figure 5 is an elevational view showing a Front panel of the electronic unit
Figure 6 is an elevational view showing a Rear panel of the electronic unit
Figure 7 is an isometric view of a roof membrane on a roof deck including a basic illustration of the sensor brushes and measurement circuits of the LOCATE portion of the system.
Figure 8 is a circuit diagram of the LOCATE portion of the system.

### DETAILED DESCRIPTION

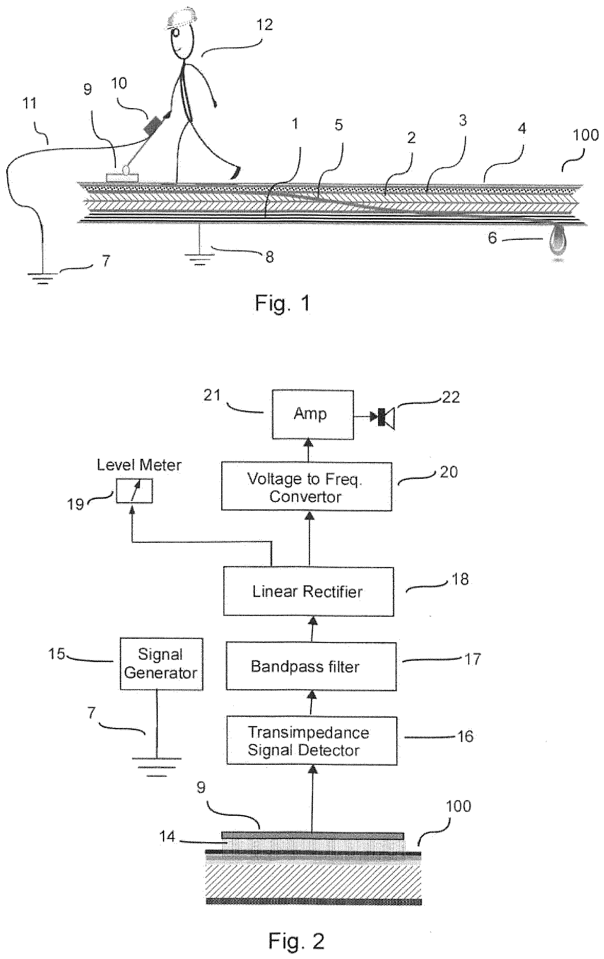

Referring to Figure 1 a typical membrane assembly of a roof assembly 100 is illustrated which includes a structural roof deck 1, which may or may not have a vapor barrier, is covered with two layers of insulation 2, a cover board 3 and finally the roof membrane 4. In operation a technician 12 sweeps the roof with the probe 9 in an area to be tested.

A signal generator 15 in an electronic unit 10 injects an ac signal into the building ground 7 through a conductor 11. The signal travels through the grounded water path to the underside of the membrane in the affected area. This signal is then picked up by the sensor plate 9 by capacitive coupling to the moisture in the roof assembly directly below the sensor plate. The electronic unit 10 also has detection circuits which filter and amplify the coupled signal. A meter in the unit displays the signal level and a voltage to frequency converter is fed to an on-board speaker which also provides an audible indication as to the strength of the detected signal. The technician 12 sweeps across the membrane until the signal reaches a maximum. This is most likely very near to the source of the leak.

Referring to Figures 1 and 2, a typical roof assembly 100 with a water path 5 due to a leak is illustrated. A conductive sensor 9 is positioned in close proximity to the membrane 4 and detects by changes in capacitance the electric field 14 that has been conducted through the water path 5 from the building ground 8 which is coupled to a low frequency signal generator 15 that is connected to a building ground 7. The detected low frequency ac signal is communicated to a transimpedance amplifier 16 which has a logarithmic gain control. The output of the transimpedance amplifier is fed into a narrow band bandpass filter 17 which eliminates any spurious electrical interference. The amplified and filtered signal is then fed into a linear rectifier 18 which translates the amplitude of the ac signal into a precise dc signal which exactly matches the ac signal amplitude down to low levels. The output of the linear rectifier provides two outputs, one output dives an analog level meter 19 which provides a visual indication of the received signal level while the outer output is fed into a voltage to frequency converter 20.

The voltage to frequency converter translates the dc signal from the linear rectifier into a variable audible tone whose frequency is proportional to the dc signal level. The voltage to frequency converter output drives an amplifier 21 which powers a speaker 22 thereby providing the technician with both a visual and audible indication of the signal level while searching for the leak location.

The system herein thus acts as a test instrument designed to assist in the detection and location of leaks in conventional roof assemblies. It is expected that for roof systems where water is leaking into the building, the water will also reach a building ground point such as a roof deck which includes a conductive component.

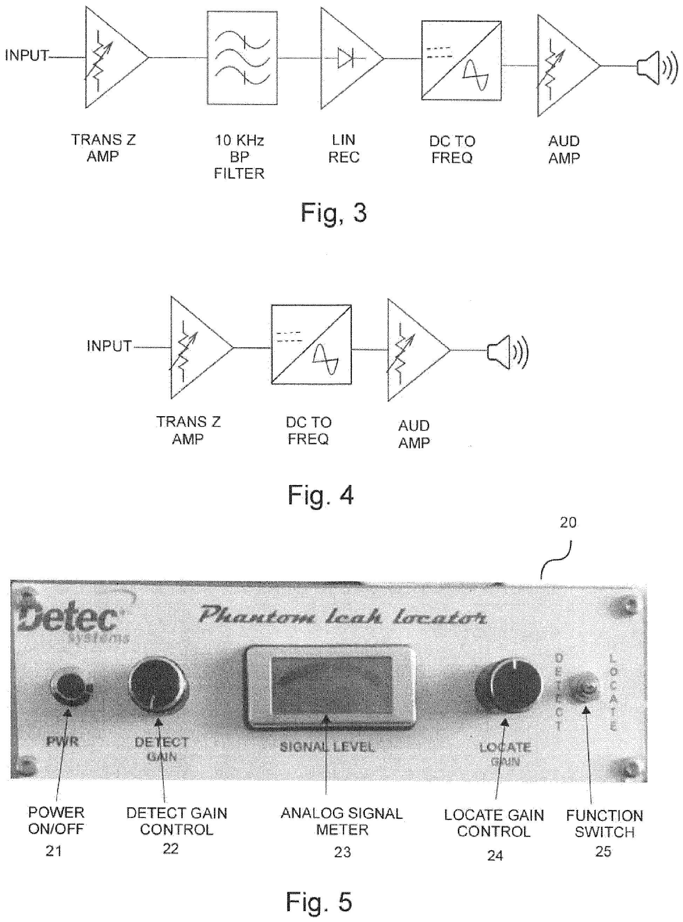

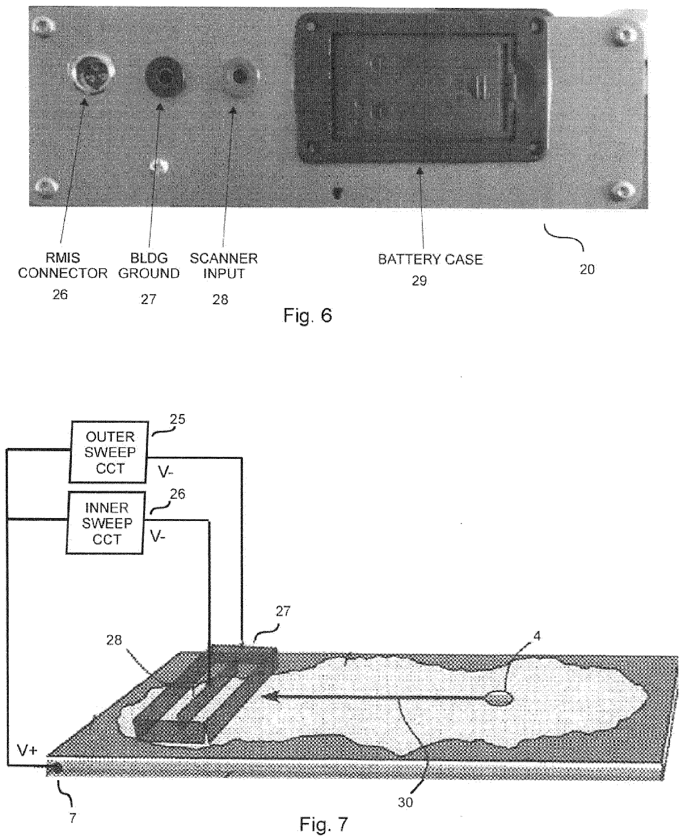

The system herein provides a common detection unit shown in Figures 5 and 6 which connects to both the sensor described above in the DETECT mode and to a second sensor described below in the LOCATE mode.

For this purpose the detection unit indicated at 20 includes a housing within which is provide a power switch 21, a gain control for the DETECT mode indicated at 22, a signal level indicator 23, a gain control 24 for the LOCATE mode and a function switch 25 to switch between modes. On the rear, the housing includes a connector for the first probe 9 described above indicated at 28, a connector 27 for connection to the building ground which can be used in both modes and a connector 26 for the connection to the second probe system as described below. A battery and case are indicated at 29.

In the DETECT mode the system will search for moisture which has accumulated directly under the membrane and has an electrical path to building ground which is more likely to be the problem leak.

The membrane is typically sprayed with a light surface of water to provide a dc conductive path through on the surface of the membrane through any breach to the grounded moisture below the membrane.

As illustrated in Figure 1, scanning a roof assembly for the presence of moisture under the membrane is accomplished by injecting a 10 KHz signal into the building ground and employing a capacitive probe method. A conductive sensing surface or plate 9 is placed on top the insulating membrane and then scanned across the membrane surface searching for the 10KHz signal. Any grounded moisture under the membrane forms the second plate of a parallel capacitor and couples the signal to the sensing surface.

The conductive sensing surface scans the top of the membrane. When it reaches an area where moisture has accumulated under the membrane, the sensing circuits will detect the 10 KHz signal that has been coupled through the membrane. The unit will then emit an audible tone which will rise in frequency proportional to the signal strength. This identified area is most likely related to the roof leak.

The INPUT signal from the conducting surface sensor is amplified by the Transimpedance amplifier. The gain is adjusted by the potentiometer control labeled DETECT GAIN. This is followed by a Butterworth Band Pass Filter centered at 10 KHz.

The output of the filter is rectified by a linear detection circuit. The output from the rectifier circuit is a dc signal that is proportional to the 10 KHz signal at the output of the BP filter. The dc signal is then transformed into an audible tone by a dc to frequency converter circuit. The audible tone's frequency is proportional to the input signal. The tone signal is then amplified and fed into an internal speaker.

The system can then be switched to the LOCATE mode to locate any membrane breaches in the subject area using a DC circuit.

In the LOCATE mode shown in Figure 4 the system connects the positive battery to the building ground lead. The INPUT lead is connected to a roller sensor which is coupled to a Transimpedance amplifier. The gain is adjusted by the potentiometer control labeled LOCATE GAIN. The output of the DC amplifier circuit is a dc signal that is proportional to any breach current. The dc signal is then transformed into an audible tone by a dc to frequency converter circuit. The tone frequency which is proportional to the input signal level is then amplified and fed into an internal speaker.

Referring to Figures 5 and 6, the electronics are housed in a metal chassis measuring 6.5" W x 2" H x 6.5" D. The power switch is a push on/push off type. The DETEC and LOCATE GAIN controls adjust the gain of the trans impedance front end amplifiers and provide almost all the amplification of the input signal. In the full anticlockwise setting, the gain of the stages is zero. The function switch 24 is a three-pole double throw toggle switch which selects the operation of the system from DETECT to LOCATE as needed. The signal level meter provides an analog reading of the signal level. Full scale on the meter indicates that the electronic circuits are at their maximum signal level.

Referring to Figure 6, the rear panel has a standard connector 26 with the inner and outer pins connected to the input leads of the unit in ether mode. The connector 26 has a ground pin which is connected to the building ground. The two banana jacks 27 and 28 also are connected to building ground and the input leads of the unit as shown. The battery case is mounted on the right-hand side of the cover as shown. The unit operates on a single 9-volt alkaline battery and will power the unit for up to 8 hours.

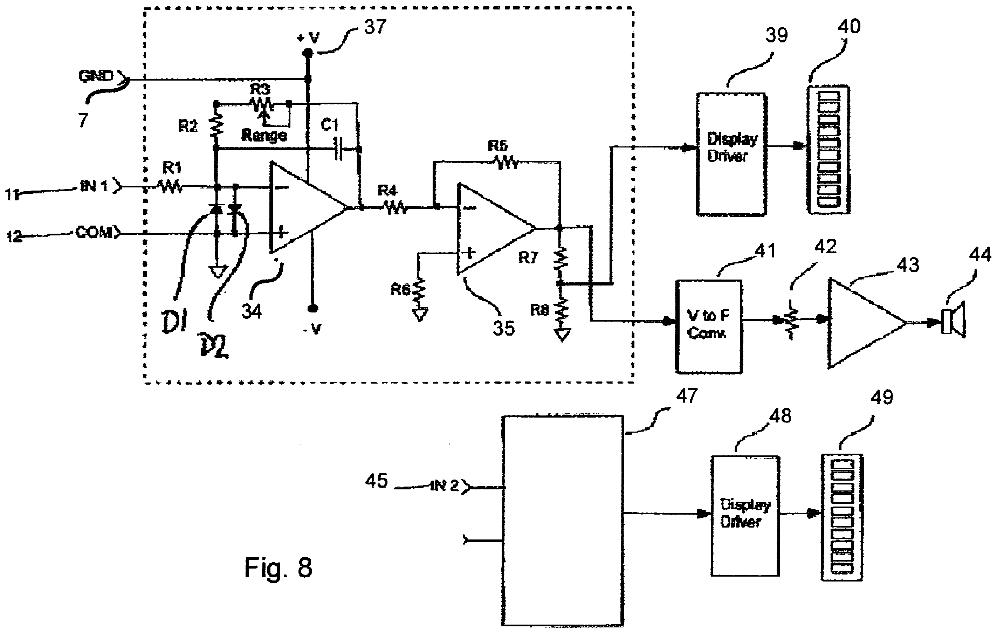

Turning now to the second LOCATE mode as shown in Figures 7 and 8, a defect in the membrane 4 allows water to intrude and forms a conductive path to the roof deck. The conductive outer brushes 27 and inner brush 28 are placed on the top surface of the membrane 4 with the outer perimeter conductive brushes 27 surrounding the inner brush 28. The brush sets are positioned so as to be in intimate contact with the wetted surface of the test area. The outer sweep detection circuit 25 and inner sweep detection circuit 26 which share a common power supply are connected to the outer brush set 27 and inner brush set 28 respectively with the common positive side of both connected to a the deck ground 7.

A DC potential is applied between the roof deck and the wetted area. At the membrane damage site there is a conductive path through the membrane and a leakage current 30 travels through the damage point and back to the outer conductive brush 27. The return current picked up by the outer brushes is measured and displayed on the outer sweep circuit 25. As the outer brush perimeter surrounds the inner brush sensor, very little of the return current reaches the inner brush 28. The sweep system is then moved forward over the membrane towards the defect and when the outer brush passes over the damage site, the inner brush picks up the return current and provides a visual and audible alarm. The damage site is thereby located.

A detailed schematic of the detector circuit is shown in Figure 8. The roof deck connection is connected to the ground terminal which ties the connecting cable from roof deck to the positive supply 37 of the circuit. The connecting lead from the inner brush 28 is connected to the negative summing input of a first stage Amplifier 34. Diodes D1 and D2 provide input protection. The gain of the first stage is set by Resistors R2 and R3 while Capacitor C1 filters out any unwanted noise. The output of Amplifier 34 is tied to the input of a second Amplifier 35 through Resistor R4. Resistors R4, R5 set the gain of the second stage Amplifier to unity. The positive summing input of Amplifier 35 is tied to common through Resistor R6.

A voltage to frequency converter 41 has an input which is connected to the output of Amplifier 45. The output of the voltage to frequency converter is applied to the input of audio Amplifier 43 through volume control 42. The audio output of Amplifier 43 is connected to a speaker 44. The output of Amplifier 35 is applied to voltage divider defined by Resistors R7 and R8 which scales the signal level and applies it to the input of a display driver 39. The display driver 39 is connected to and drives an LED level display 40 of the inner brush.

The entire first and second stage input circuit 48 is duplicated in a second sensing system schematically indicated at 47. The connecting lead from the outer brushes 28 is connected to the input of the second amplifier circuit 47 as indicated at 45. The output of the circuit 47 is applied to display driver 48 which drives a LED level display 49 of the outer brush.

## Claims

1. A method of detecting a leak in a roof (100), where the roof comprises a generally horizontal roof support deck (1) with a water impermeable membrane (4) applied onto the upper surface, the method comprising:
providing a conductor arrangement (9) for location on the roof (100) above the membrane (4);
moving the conductor arrangement (9) across the roof (100) to different locations thereon;
providing a return conductor arrangement (8) for electrical connection to the support deck;
where at least a component of the support deck is conductive;
**characterized in** the steps of:
using a signal generator (10,15) to inject an ac signal into the conductive component (8) of the support deck so that the ac signal travels through a grounded water path to the underside of the membrane (4) in an area of moisture and is communicated to the conductor arrangement (9) by capacitive coupling;
detecting changes in capacitance between a first conductor defined by the conductor arrangement (9) and the conductive component (8) of the support deck caused by the presence of the moisture;
and providing an output indication of the presence of moisture indicative of the leak in response to the changes in capacitance.

2. The method according to claim 1 wherein the conductor arrangement (9) comprises a generally horizontal conductive surface.

3. The method according to claim 2 wherein conductive surface (9) is carried on a manual handle for scanning movement across the roof.

4. The method according to claim 2 or 3 wherein the conductive surface is flat and is arranged to slide over a surface of the roof (100).

5. The method according to any preceding claim wherein the membrane (4) is non-conductive.

6. The method according to any preceding claim wherein the ac signal is detected at the conductor arrangement (9) and is filtered and amplified to detect the changes therein.

7. The method according to any preceding claim wherein there is provided a meter (19) which displays the received signal amplitude and a voltage to frequency converter (20) which communicates an audio signal to a speaker (22) which provides an audible indication as to the amplitude of the detected signal.

8. The method according to any preceding claim wherein, in response to the output indication of detection of the presence of moisture, a second location operation is carried out to detect conduction of current through the membrane (4) at a leak into order to locate the leak.

9. The method according to claim 8 wherein there is provided a common assembly for detection of the capacitance changes and to carry out the second operation where the common assembly is connectible to the conductor arrangement (9) for detection of capacitance changes and connectible to a second detector (27, 28) for the second operation.

10. The method according to claim 9 wherein the second operation comprises:
providing a second conductor arrangement (27, 28) for engaging the roof above the membrane (4);
providing a return conductor arrangement (8) for electrical connection to the conductive component (8) of the support deck;
generating an electrical potential between the first conductor arrangement (27, 28) and return conductor arrangement (8);
mounting the second conductor arrangement (27, 28) on a carriage which can be moved over the roof (100) so as to scan the second conductor arrangement over selected areas of the roof while the second conductor arrangement (27, 28) remains in contact with the roof (100) as the carriage is moved;
sensing the current flowing from the roof support deck (1) to the second conductor arrangement (27, 28);
and detecting the changes in the current as the second conductor arrangement (27, 28) is scanned over the selected areas of the roof (100) to locate the leak in the membrane (4).

11. The method according to claim 10 wherein the carriage is mounted on roller wheels for carrying the carriage in rolling movement over the roof and the carriage includes a handle such that the carriage can be manually rolled across the roof (100).

12. The method according to claim 10 or 11 wherein the second conductor arrangement (27, 28) includes first (27) and second (28) conductor members which are electrically isolated from each other, wherein an electrical potential is arranged to be applied between the second conductor member (27) of the first conductor arrangement and the roof support deck (1) and between the second conductor member (28) of the second conductor arrangement (27, 28) and the roof support deck (1) and wherein the current flowing from the roof support deck (1) to the first and second conductor members (27, 28) is independently sensed to detect the changes in current as the first conductor arrangement is scanned over the selected areas of the roof to locate the leak in the membrane.

13. The method according to claim 12 wherein the first conductor member (28) is an inner member and the second member (27) is an outer shielding member surrounding the first inner member with both the first inner member and the second outer member engaging the roof (100).

14. The method according to any preceding claim wherein the return conductor arrangement (8) is connected to a building ground.

15. An apparatus for detecting and locating a leak in a roof (100), where the roof (100) comprises a generally horizontal roof support deck (1) with a water impermeable membrane (4) applied onto the upper surface of the support deck where at least a component of the support deck is conductive, the apparatus comprising:
a detection assembly (10);
a first conductor arrangement (9) for location on the roof above the membrane (4), the conductor arrangement (9) being arranged for connection to the detection assembly;
the first conductor arrangement (9) being mounted for movement across the roof (100) to different locations thereon;
a return conductor arrangement (8) for electrical connection to the support deck (1) the conductor arrangement (8) being arranged for connection to the detection assembly;
the first conductor arrangement (9) being arranged for detecting changes in capacitance at the membrane (4) caused by presence of moisture;
the detection assembly being arranged for providing an output indication of the presence of moisture in response to the changes in capacitance;
a second conductor arrangement (27, 28) for location on the roof above the membrane (4), the second conductor arrangement (27, 28) being arranged for connection to the detection assembly;
the second conductor arrangement (27, 28) being mounted for movement across the roof (1) to different locations thereon;
the second conductor arrangement (27, 28) being arranged for detecting changes in conductance through the membrane (4) caused by presence of moisture;
**characterized in that**, the first conductor arrangement (9) is used in a first operation to detect presence of moisture in selected areas of the support deck (1) and the second conductor arrangement (27, 28) is used subsequently in a second operation on the selected areas to detect location of the moisture;
wherein, in order to detect the changes in capacitance in the first operation, a signal generator (10) is provided which injects an ac signal into the conductive arrangement (8) of the support deck (1) so that the ac signal travels through a grounded water path to the underside of the membrane (4) in an area of moisture and is communicated to the conductor arrangement (9) by capacitive coupling, wherein this acts to detect the moisture indicative of the leak but has less ability to locate the specific location at which the moisture is penetrating at the leak;
and wherein the detector apparatus (10) is arranged in the second operation:
to generate an electrical potential between the first conductor arrangement (9) and return conductor arrangement (8);
the second conductor arrangement (27, 28) being mounted on a carriage which can be moved over the roof (100) so as to scan the second conductor arrangement (27, 28) over selected areas of the roof while the second conductor arrangement (27, 28) remains in contact with the roof as the carriage is moved;
to sense current flowing from the roof support deck (1) to the second conductor arrangement (27, 28);
and to detect the changes in the current as the second conductor arrangement (27, 28) is scanned over the selected areas of the roof to locate the leak in the membrane (4).

## Patentansprüche

1. Verfahren zum Detektieren eines Lecks in einem Dach (100), wobei das Dach ein im Wesentlichen horizontales Dachträgerdeck (1) mit einer auf die obere Oberfläche aufgebrachten wasserundurchlässigen Membran (4) umfasst, wobei das Verfahren umfasst:
Bereitstellen einer Leiteranordnung (9) zur Anordnung auf dem Dach (100) oberhalb der Membran (4);
Bewegen der Leiteranordnung (9) über das Dach (100) zu verschiedenen Stellen darauf;
Bereitstellen einer Rückleiteranordnung (8) zur elektrischen Verbindung mit dem Trägerdeck;
wobei zumindest eine Komponente des Trägerdecks leitfähig ist;
**gekennzeichnet durch** die Schritte:
Verwenden eines Signalgenerators (10, 15), um ein Wechselstromsignal in die leitfähige Komponente (8) des Trägerdecks einzuspeisen, sodass sich das Wechselstromsignal durch einen geerdeten Wasserpfad zur Unterseite der Membran (4) in einem Feuchtigkeitsbereich ausbreitet und durch kapazitive Kopplung an die Leiteranordnung (9) übertragen wird;
Detektieren von Kapazitätsänderungen zwischen einem durch die Leiteranordnung (9) definierten ersten Leiter und der leitfähigen Komponente (8) des Trägerdecks, die durch das Vorhandensein der Feuchtigkeit verursacht werden;
und Bereitstellen einer Ausgangsanzeige für das Vorhandensein von Feuchtigkeit, die das Leck anzeigt, als Reaktion auf die Kapazitätsänderungen.

2. Verfahren nach Anspruch 1, wobei die Leiteranordnung (9) eine im Wesentlichen horizontale leitfähige Oberfläche umfasst.

3. Verfahren nach Anspruch 2, wobei die leitfähige Oberfläche (9) an einem manuellen Handgriff für eine Abtastbewegung über das Dach getragen wird.

4. Verfahren nach Anspruch 2 oder 3, wobei die leitfähige Oberfläche flach ist und dazu angeordnet ist, über eine Oberfläche des Daches (100) zu gleiten.

5. Verfahren nach einem der vorhergehenden Ansprüche, wobei die Membran (4) nichtleitend ist.

6. Verfahren nach einem der vorhergehenden Ansprüche, wobei das Wechselstromsignal an der Leiteranordnung (9) detektiert sowie gefiltert und verstärkt wird, um die Änderungen darin zu detektieren.

7. Verfahren nach einem der vorhergehenden Ansprüche, wobei ein Messgerät (19) bereitgestellt ist, welches die empfangene Signalamplitude anzeigt, sowie ein Spannungs-Frequenz-Wandler (20), welcher ein Audiosignal an einen Lautsprecher (22) übermittelt, der eine hörbare Anzeige hinsichtlich der Amplitude des detektierten Signals bereitstellt.

8. Verfahren nach einem der vorhergehenden Ansprüche, wobei als Reaktion auf die Ausgangsanzeige für die Detektion des Vorhandenseins von Feuchtigkeit ein zweiter Ortungsvorgang durchgeführt wird, um den Stromfluss durch die Membran (4) an einem Leck zu detektieren, um das Leck zu orten.

9. Verfahren nach Anspruch 8, wobei eine gemeinsame Anordnung zur Detektion der Kapazitätsänderungen und zur Durchführung des zweiten Vorgangs bereitgestellt ist, wobei die gemeinsame Anordnung mit der Leiteranordnung (9) zur Detektion von Kapazitätsänderungen verbindbar ist und mit einem zweiten Detektor (27, 28) für den zweiten Vorgang verbindbar ist.

10. Verfahren nach Anspruch 9, wobei der zweite Vorgang umfasst:
Bereitstellen einer zweiten Leiteranordnung (27, 28) zum Angreifen an das Dach oberhalb der Membran (4);
Bereitstellen einer Rückleiteranordnung (8) zur elektrischen Verbindung mit der leitfähigen Komponente (8) des Trägerdecks;
Erzeugen eines elektrischen Potentials zwischen der ersten Leiteranordnung (27, 28) und der Rückleiteranordnung (8);
Montieren der zweiten Leiteranordnung (27, 28) auf einem Fahrgestell, welches über das Dach (100) bewegt werden kann, um die zweite Leiteranordnung über ausgewählte Bereiche des Daches abzutasten, während die zweite Leiteranordnung (27, 28) bei Bewegung des Fahrgestells in Kontakt mit dem Dach (100) bleibt;
Erfassen des vom Dachträgerdeck (1) zur zweiten Leiteranordnung (27, 28) fließenden Stroms;
und Detektieren der Änderungen im Strom, während die zweite Leiteranordnung (27, 28) über die ausgewählten Bereiche des Daches abgetastet wird, um das Leck in der Membran (4) zu orten.

11. Verfahren nach Anspruch 10, wobei das Fahrgestell auf Laufrädern montiert ist, um das Fahrgestell in rollender Bewegung über das Dach zu tragen, und das Fahrgestell einen Griff aufweist, sodass das Fahrgestell manuell über das Dach (100) gerollt werden kann.

12. Verfahren nach Anspruch 10 oder 11, wobei die zweite Leiteranordnung (27, 28) erste (27) und zweite (28) Leiterelemente umfasst, die voneinander elektrisch isoliert sind, wobei ein elektrisches Potential eingerichtet ist, zwischen dem zweiten Leiterelement (27) der ersten Leiteranordnung und dem Dachträgerdeck (1) sowie zwischen dem zweiten Leiterelement (28) der zweiten Leiteranordnung (27, 28) und dem Dachträgerdeck (1) angelegt zu werden, und wobei der vom Dachträgerdeck (1) zu den ersten und zweiten Leiterelementen (27, 28) fließende Strom unabhängig erfasst wird, um die Änderungen im Strom zu detektieren, während die erste Leiteranordnung über die ausgewählten Bereiche des Daches abgetastet wird, um das Leck in der Membran zu orten.

13. Verfahren nach Anspruch 12, wobei das erste Leiterelement (28) ein inneres Element ist und das zweite Element (27) ein äußeres Abschirmelement ist, welches das erste innere Element umgibt, wobei sowohl das erste innere Element als auch das zweite äußere Element am Dach (100) angreifen.

14. Verfahren nach einem der vorhergehenden Ansprüche, wobei die Rückleiteranordnung (8) mit einer Gebäudeerdung verbunden ist.

15. Vorrichtung zum Detektieren und Orten eines Lecks in einem Dach (100), wobei das Dach (100) ein im Wesentlichen horizontales Dachträgerdeck (1) mit einer auf die obere Oberfläche des Trägerdecks aufgebrachten wasserundurchlässigen Membran (4) umfasst, wobei zumindest eine Komponente des Trägerdecks leitfähig ist, wobei die Vorrichtung umfasst:
eine Detektionsanordnung (10);
eine erste Leiteranordnung (9) zur Anordnung auf dem Dach oberhalb der Membran (4), wobei die Leiteranordnung (9) zur Verbindung mit der Detektionsanordnung eingerichtet ist;
wobei die erste Leiteranordnung (9) zur Bewegung über das Dach (100) zu verschiedenen Stellen darauf montiert ist;
eine Rückleiteranordnung (8) zur elektrischen Verbindung mit dem Trägerdeck (1), wobei die Leiteranordnung (8) zur Verbindung mit der Detektionsanordnung eingerichtet ist;
wobei die erste Leiteranordnung (9) zum Detektieren von Kapazitätsänderungen an der Membran (4) eingerichtet ist, die durch das Vorhandensein von Feuchtigkeit verursacht werden;
wobei die Detektionsanordnung eingerichtet ist, um als Reaktion auf die Kapazitätsänderungen eine Ausgangsanzeige für das Vorhandensein von Feuchtigkeit bereitzustellen;
eine zweite Leiteranordnung (27, 28) zur Anordnung auf dem Dach oberhalb der Membran (4), wobei die zweite Leiteranordnung (27, 28) zur Verbindung mit der Detektionsanordnung eingerichtet ist;
wobei die zweite Leiteranordnung (27, 28) zur Bewegung über das Dach (1) zu verschiedenen Stellen darauf montiert ist;
wobei die zweite Leiteranordnung (27, 28) zum Detektieren von Leitfähigkeitsänderungen durch die Membran (4) eingerichtet ist, die durch das Vorhandensein von Feuchtigkeit verursacht werden;
**dadurch gekennzeichnet, dass** die erste Leiteranordnung (9) in einem ersten Vorgang verwendet wird, um das Vorhandensein von Feuchtigkeit in ausgewählten Bereichen des Trägerdecks (1) zu detektieren, und die zweite Leiteranordnung (27, 28) anschließend in einem zweiten Vorgang auf den ausgewählten Bereichen verwendet wird, um den Ort der Feuchtigkeit zu detektieren;
wobei, um die Kapazitätsänderungen im ersten Vorgang zu detektieren, ein Signalgenerator (10) bereitgestellt ist, welcher ein Wechselstromsignal in die leitfähige Anordnung (8) des Trägerdecks (1) einspeist, sodass sich das Wechselstromsignal durch einen geerdeten Wasserpfad zur Unterseite der Membran (4) in einem Feuchtigkeitsbereich ausbreitet und durch kapazitive Kopplung an die Leiteranordnung (9) übertragen wird, wobei dies dazu dient, die das Leck anzeigende Feuchtigkeit zu detektieren, jedoch eine geringere Fähigkeit besitzt, die spezifische Stelle zu orten, an der die Feuchtigkeit am Leck eindringt;
und wobei die Detektorvorrichtung (10) im zweiten Vorgang eingerichtet ist:
ein elektrisches Potential zwischen der ersten Leiteranordnung (9) und der Rückleiteranordnung (8) zu erzeugen;
wobei die zweite Leiteranordnung (27, 28) auf einem Fahrgestell montiert ist, welches über das Dach (100) bewegt werden kann, um die zweite Leiteranordnung (27, 28) über ausgewählte Bereiche des Daches abzutasten, während die zweite Leiteranordnung (27, 28) bei Bewegung des Fahrgestells in Kontakt mit dem Dach bleibt;
um Strom zu erfassen, der vom Dachträgerdeck (1) zur zweiten Leiteranordnung (27, 28) fließt;
und die Änderungen im Strom zu detektieren, während die zweite Leiteranordnung (27, 28) über die ausgewählten Bereiche des Daches abgetastet wird, um das Leck in der Membran (4) zu orten.

## Revendications

1. - Procédé de détection d'une fuite dans un toit (100), le toit comprenant un platelage de support de toit (1) généralement horizontal avec une membrane (4) imperméable à l'eau appliquée sur la surface supérieure, le procédé comprenant:
fournir un ensemble conducteur (9) destiné à être placé sur le toit (100) au-dessus de la membrane (4) ;
déplacer l'ensemble conducteur (9) à travers le toit (100) jusqu'à différents emplacements sur celui-ci ;
fournir un ensemble conducteur de retour (8) destiné à être connecté électriquement au platelage de support ;
au moins un composant du platelage de support étant conducteur;
**caractérisé par** les étapes consistant à :
utiliser un générateur de signaux (10, 15) pour injecter un signal à courant alternatif dans le composant conducteur (8) du platelage de support, de telle sorte que le signal à courant alternatif circule à travers un trajet d'eau mis à la terre jusqu'à la face inférieure de la membrane (4) dans une zone d'humidité et est transmis à l'ensemble conducteur (9) par couplage capacitif ;
détecter des variations de capacité, provoquées par la présence de l'humidité, entre un premier conducteur défini par l'ensemble conducteur (9) et le composant conducteur (8) du platelage de support ; et
fournir une indication de sortie de la présence d'humidité, indiquant la fuite, en réponse aux variations de capacité.

2. - Procédé selon la revendication 1, dans lequel l'ensemble conducteur (9) comprend une surface conductrice généralement horizontale.

3. - Procédé selon la revendication 2, dans lequel la surface conductrice (9) est portée sur une poignée manuelle pour un mouvement de balayage à travers le toit.

4. - Procédé selon la revendication 2 ou 3, dans lequel la surface conductrice est plate et est disposée pour glisser sur une surface du toit (100).

5. - Procédé selon l'une quelconque des revendications précédentes, dans lequel la membrane (4) est non conductrice.

6. - Procédé selon l'une quelconque des revendications précédentes, dans lequel le signal à courant alternatif est détecté sur l'ensemble conducteur (9) et est filtré et amplifié afin de détecter les variations de celui-ci.

7. - Procédé selon l'une quelconque des revendications précédentes, dans lequel il est prévu un dispositif de mesure (19) qui affiche l'amplitude du signal reçu, et un convertisseur tension en fréquence (20) qui transmet un signal audio à un haut-parleur (22), lequel fournit une indication sonore quant à l'amplitude du signal détecté.

8. - Procédé selon l'une quelconque des revendications précédentes, dans lequel, en réponse à l'indication de sortie de détection de la présence d'humidité, une seconde opération de localisation est effectuée pour détecter une conduction de courant à travers la membrane (4) au niveau d'une fuite afin de localiser la fuite.

9. - Procédé selon la revendication 8, dans lequel il est prévu un ensemble commun destiné à détecter les variations de capacité et à effectuer la seconde opération, l'ensemble commun étant apte à être connecté à l'ensemble conducteur (9) pour la détection des variations de capacité et à être connecté à un second détecteur (27, 28) pour la seconde opération.

10. - Procédé selon la revendication 9, dans lequel la seconde opération comprend :
fournir un second ensemble conducteur (27, 28) destiné à s'engager avec le toit au-dessus de la membrane (4) ;
fournir un ensemble conducteur de retour (8) destiné à être connecté électriquement au composant conducteur (8) du platelage de support ;
générer un potentiel électrique entre le premier ensemble conducteur (27, 28) et l'ensemble conducteur de retour (8) ;
monter le second ensemble conducteur (27, 28) sur un chariot qui peuvent être déplacé sur le toit (100) de manière à balayer le second ensemble conducteur sur des zones sélectionnées du toit tandis que le second ensemble conducteur (27, 28) reste en contact avec le toit (100) lors du déplacement du chariot ;
détecter le courant circulant du platelage de support de toit (1) au second ensemble conducteur (27, 28) ; et
détecter les variations de courant lorsque le second ensemble conducteur (27, 28) est balayé sur les zones sélectionnées du toit (100) afin de localiser la fuite dans la membrane (4).

11. - Procédé selon la revendication 10, dans lequel le chariot est monté sur des roues-galets pour permettre au chariot de rouler sur le toit et le chariot comprend une poignée de telle sorte que l'on peut faire rouler manuellement le chariot à travers le toit (100).

12. - Procédé selon la revendication 10 ou 11, dans lequel le second ensemble conducteur (27, 28) comprend un premier (27) et un second (28) élément conducteur qui sont isolés électriquement l'un de l'autre, dans lequel un potentiel électrique est prévu pour être appliqué entre le second élément conducteur (27) du premier ensemble conducteur et le platelage de support de toit (1) et entre le second élément conducteur (28) du second ensemble conducteur (27, 28) et le platelage de support de toit (1), et dans lequel le courant circulant du platelage de support de toit (1) au premier et au second élément conducteur (27, 28) est détecté indépendamment afin de détecter les variations de courant lorsque le premier ensemble conducteur est balayé sur les zones sélectionnées du toit pour localiser la fuite dans la membrane.

13. - Procédé selon la revendication 12, dans lequel le premier élément conducteur (28) est un élément interne et le second élément (27) est un élément de blindage externe entourant le premier élément interne, le premier élément interne et le second élément externe s'engageant tous deux avec le toit (100).

14. - Procédé selon l'une quelconque des revendications précédentes, dans lequel l'ensemble conducteur de retour (8) est relié à la terre d'un bâtiment.

15. - Appareil pour détecter et localiser une fuite dans un toit (100), le toit (100) comprenant un platelage de support de toit (1) généralement horizontal avec une membrane imperméable à l'eau (4) appliquée sur la surface supérieure du platelage de support, au moins un composant du platelage de support étant conducteur, l'appareil comprenant :
un ensemble de détection (10) ;
un premier ensemble conducteur (9) destiné à être placé sur le toit au-dessus de la membrane (4), l'ensemble conducteur (9) étant disposé pour être relié à l'ensemble de détection ;
le premier ensemble conducteur (9) étant monté de manière à pouvoir se déplacer à travers le toit (100) jusqu'à différents emplacements sur celui-ci ;
un ensemble conducteur de retour (8) destiné à être relié électriquement au platelage de support (1), l'ensemble conducteur (8) étant disposé pour être relié à l'ensemble de détection ;
le premier ensemble conducteur (9) étant agencé pour détecter des variations de capacité sur la membrane (4) provoquées par la présence d'humidité ;
l'ensemble de détection étant agencé pour fournir une indication de sortie de la présence d'humidité en réponse aux variations de capacité ;
un second ensemble conducteur (27, 28) destiné à être placé sur le toit au-dessus de la membrane (4), le second ensemble conducteur (27, 28) étant agencé pour être relié à l'ensemble de détection ;
le second ensemble conducteur (27, 28) étant monté de manière à pouvoir se déplacer à travers le toit (1) jusqu'à différents emplacements sur celui-ci ;
le second ensemble conducteur (27, 28) étant agencé pour détecter des variations de conductance, provoquées par la présence d'humidité, à travers la membrane (4);
**caractérisé par le fait que** le premier ensemble conducteur (9) est utilisé dans une première opération pour détecter la présence d'humidité dans des zones sélectionnées du platelage de support (1) et le second ensemble conducteur (27, 28) est utilisé par la suite dans une seconde opération sur les zones sélectionnées pour détecter l'emplacement de l'humidité ;
dans lequel, afin de détecter les variations de capacité dans la première opération, il est prévu un générateur de signaux (10), lequel injecte un signal à courant alternatif dans l'ensemble conducteur (8) du platelage de support (1) de telle sorte que le signal à courant alternatif circule à travers un trajet d'eau mis à la terre jusqu'à la face inférieure de la membrane (4) dans une zone d'humidité et est transmis à l'ensemble conducteur (9) par couplage capacitif, ce qui agit pour détecter l'humidité indiquant la fuite mais offre une capacité moindre à localiser l'emplacement spécifique auquel l'humidité pénètre au niveau de la fuite ;
et dans lequel l'ensemble de détection (10) est agencé dans la seconde opération :
pour générer un potentiel électrique entre le premier ensemble conducteur (9) et l'ensemble conducteur de retour (8) ;
le second ensemble conducteur (27, 28) étant monté sur un chariot qui peut se déplacer sur le toit (100) de manière à balayer le second ensemble conducteur (27, 28) sur des zones sélectionnées du toit tandis que le second ensemble conducteur (27, 28) reste en contact avec le toit lors du déplacement du chariot ;
pour détecter un courant circulant du platelage de support de toit (1) au second ensemble conducteur (27, 28) ;
et pour détecter les variations du courant lorsque le second ensemble conducteur (27, 28) est balayé sur les zones sélectionnées du toit afin de localiser la fuite dans la membrane (4).
